# FASCICULE DE BREVET EUROPEEN

(11) **EP 1 642 378 B1**
(45) Date de publication et mention de la délivrance du brevet: **04.08.2010**
(21) Numéro de dépôt: 04767582.2
(22) Date de dépôt: 05.07.2004
(51) Int. Cl.: H02K 9/06, H02K 29/08

(54) **VENTILATEUR POUR ALTERNATEUR-DEMARREUR**
LÜFTERANORDNUNG FÜR LICHTMASCHINE/ANLASSER
VENTILATOR FOR AN ALTERNATOR - STARTER

(30) Priorité: 04.07.2003 FR 0308234
(43) Date de publication de la demande: 05.04.2006
(73) Titulaire: VALEO EQUIPEMENTS ELECTRIQUES MOTEUR, 94017 Créteil-Cedex (FR)
(72) Inventeur: ROULEAU, Blaise, F-75014 Paris (FR); VASILESCU, Claudiu, F-75020 Paris (FR)
(74) Mandataire: Gamonal, Didier
(86) Numéro de dépôt international: PCT/FR2004/001747
(87) Numéro de publication internationale: WO 2005/006518

(56) Documents cités:
- WO-A-01/69762
- FR-A- 2 422 167
- FR-A- 2 830 293
- KR-B- 244 387

## Description

### Domaine de l'invention

L'invention concerne un ventilateur pour alternateur de véhicule automobile et, en particulier pour alternateur-démarreur. Ce ventilateur, destiné à être solidarisé en rotation au rotor de l'alternateur-démarreur, présente la particularité d'intégrer, d'une part, un insert métallique et, d'autre part, une cible magnétique permettant un suivi magnétique de la rotation du rotor.

L'invention trouve des applications dans le domaine de l'industrie automobile et, en particulier, dans le domaine des alternateurs et des alternateurs-démarreurs pour véhicules automobiles.

### Etat de la technique

Dans un véhicule automobile, l'alternateur permet de transformer un mouvement de rotation du rotor inducteur, entraîné par le moteur thermique du véhicule, en un courant électrique induit dans les bobinages du stator. L'alternateur peut aussi être réversible. Il constitue alors un moteur électrique, qui peut entraîner en rotation, via l'arbre du rotor, le moteur thermique du véhicule. Cet alternateur réversible est appelé alternateur-démarreur, ou encore alterno-démarreur, et permet de transformer l'énergie mécanique en une énergie électrique, et vice versa. Ainsi, un alterno-démarreur peut démarrer le moteur du véhicule automobile, constituer un moteur auxiliaire pour entraîner, par exemple, un compresseur de climatisation, ou encore fonctionner en mode de moteur pour entraîner le véhicule automobile.

D'une façon générale, un alterno-démarreur permet de transformer un mouvement de rotation du rotor inducteur, entraîné par le moteur thermique du véhicule, en un courant électrique induit dans les bobinages du stator. Les bobinages du stator, ainsi que le rotor, sont reliés à un circuit électronique qui comporte notamment un pont redresseur. Ce circuit électronique, avec l'évolution des véhicules, est devenu complexe. Et plus ce circuit électronique est complexe, plus il produit de chaleur. Il est donc impératif de le refroidir efficacement. Cela est réalisé généralement au moyen d'un ventilateur placé à proximité du circuit électronique, habituellement à l'arrière du rotor. Ce ventilateur est généralement fixé sur le rotor de l'alternateur-démarreur de façon à être solidarisé en rotation avec le rotor. Le ventilateur refroidit également le stator et le roulement. Classiquement, le ventilateur est réalisé dans un matériau métallique. L'insert est fixé sur le rotor par soudage, vissage ou toute autre technique de fixation connue dans le domaine. Un ventilateur métallique ne peut comporter que des pales de ventilation de formes simples, réalisables par découpage et pliage d'une plaque de métal. De plus, le nombre de pales de ventilation est limité, en fonction de la taille de la plaque de métal. Or, pour bien refroidir l'électronique, il est souvent nécessaire d'avoir recours à un nombre important de pales de ventilation ou bien à des pales de formes complexes.

Il existe actuellement des ventilateurs réalisés dans un matériau plastique, surmoulé sur un insert métallique. Le plastique présente l'avantage d'être plus facile à travailler que le métal. En effet, le matériau plastique permet de réaliser le ventilateur par moulage. Il est donc possible de donner des formes plus complexes et plus variées à ses pales que pour un ventilateur en métal ou d'augmenter le nombre de pales. Le ventilateur en plastique est généralement moulé sur un insert métallique fixé sur le rotor par soudage ou toute autre technique de fixation connue. Un exemple de ventilateur en plastique moulé sur un insert métallique est décrit dans la demande de brevet FR - A - 2 673 338 de la demanderesse. Le ventilateur décrit dans cette demande est moulé sur un insert en métal, par une opération de surmoulage, disposé dans la partie formant un flasque du ventilateur et servant pour la fixation du ventilateur, notamment par soudure, au rotor. Le nombre, la configuration et la disposition des pales du ventilateur peuvent être choisis en fonction de l'application du ventilateur et du rendement de refroidissement qu'il doit fournir.

Dans la demande de brevet FR-A- 2 830 293 le ventilateur est également réalisé par moulage d'un matériau plastique sur un insert métallique. Dans un mode de réalisation de cette demande l'insert métallique comporte au moins une partie d'une pale du ventilateur, l'autre partie de la pale étant en matériau plastique surmoulé sur l'insert métallique.

Ces demandes FR-A- 2 673 338 et FR-A- 2 830 293 sont conformes au préambule de la revendication 1.

Par ailleurs, dans une machine de type réversible tel qu'un alterno-démarreur, le rotor est entouré d'un stator polyphasé, généralement triphasé. La nature polyphasée nécessite un suivi de la position angulaire et de la vitesse du rotor à l'aide de moyens de suivi, pour la commande en mode moteur électrique afin d'injecter, au bon moment, du courant électrique dans l'enroulement de phase concerné du bobinage du stator. Cela est décrit, par exemple, dans les demandes de brevets FR - 2 745 444 et EP - A - 0 260 176. De tels moyens de suivi sont généralement de type magnétique.

Un exemple de moyens de suivi magnétique est décrit dans la demande de brevet WO 01/69762. Dans cette demande de brevet, la machine électrique tournante du type alterno-démarreur comporte un support creux doté d'un palier avant et d'un palier arrière reliés entre eux et possédant chacun centralement un moyen de palier traversé par l'extrémité d'un arbre portant un rotor à pôle magnétique entouré par un stator polyphasé porté intérieurement par le support. Ce dernier comporte des moyens de suivi magnétique de la rotation du rotor ainsi qu'au moins un capteur associé à une cible. Dans cette machine, la cible est une cible à lecture axiale ou radiale. Elle est fixée sur un porte-cible calé en rotation sur le rotor et implanté axialement entre le rotor et l'un des paliers avant ou arrière, en étant adjacent à celui-ci. Le palier avant ou arrière adjacent au porte-cible porte le capteur détectant le passage de la cible magnétique. Le capteur à effet Hall ou magnétorésistif fixé face à la cible sur le palier concerné assure, en connexion avec la cible, le suivi des rotations du rotor. La cible est positionnée sur un porte-cible qui peut être de nature magnétique ou amagnétique.

Ainsi, dans cette machine, un ventilateur métallique est intégré à l'arrière du rotor. Par ailleurs, un porte-cible portant une cible magnétique qui, en association avec un ou plusieurs capteurs, permet d'assurer le suivi magnétique de la rotation du rotor est également intégré à l'arrière du rotor. Le porte-cible peut être une pièce en tôle ou bien en matériau plastique ou encore une pièce en plastique surmoulant une pièce en tôle.

Cependant, les pales du ventilateur peuvent être complexes et prendre un certain volume. De plus, le porte-cible doit être monté à proximité du ventilateur, tout en étant suffisamment éloigné du ventilateur pour ne pas gêner les mouvements du flux d'air brassé par les pales de ventilation. Cet ensemble ventilateur / porte-cible présente donc un certain encombrement à l'intérieur de l'alterno-démarreur.

Par ailleurs, le montage de cet ensemble nécessite plusieurs étapes, à savoir, le montage du ventilateur sur le rotor avec, au préalable, la vérification de l'équilibrage du balourd puis le montage du porte-cible avec la cible.

### Exposée de l'invention

L'invention a justement pour but d'intégrer, dans un même encombrement, à la fois un ventilateur et une cible de suivi magnétique. Pour cela, l'invention propose un ventilateur pour alterno-démarreur en matière plastique monté sur un insert métallique et intégrant une cible magnétique, par exemple en plastoaimant. Dans l'invention, le ventilateur joue le rôle de porte-cible, ce qui permet d'éviter l'utilisation et le montage d'un porte-cible indépendant.

De façon plus précise, l'invention concerne un ventilateur pour alternateur-démarreur, fixé sur un rotor à pôles magnétiques de l'alternateur-démarreur et comportant :
- un insert métallique par lequel le ventilateur est fixé sur le rotor,
- un flasque et au moins une pale de ventilation en matériau plastique moulés sur l'insert métallique,
caractérisé en ce qu'il comporte une cible magnétique qui, en association avec au moins un capteur, assure un suivi magnétique de la rotation du rotor.

Selon une caractéristique ce ventilateur est caractérisé en ce qu'une partie des pales est en matériau plastique surmoulé sur l'insert métallique et en ce que l'autre partie des pales est métallique issue de matière avec l'insert métallique.

Selon une autre caractéristique l'insert métallique peut constituer une partie ou la totalité des pales pour la tenue mécanique.

### Brève description des figures

La figure 1 représente une coupe axiale d'un alterno-démarreur pour véhicule automobile muni d'un ventilateur de l'invention.
Les figures 2A et 2B représentent, respectivement, une vue de dessus et une vue de coté d'un ventilateur pour alterno-démarreur selon l'invention.
Les figures 3A et 3B représentent, respectivement, une vue de dessus et une vue de coté d'une variante du ventilateur pour alterno-démarreur de l'invention.
La figure 4 représente une variante en coupe axiale de l'invention.

### Description détaillée de modes de réalisation de l'invention

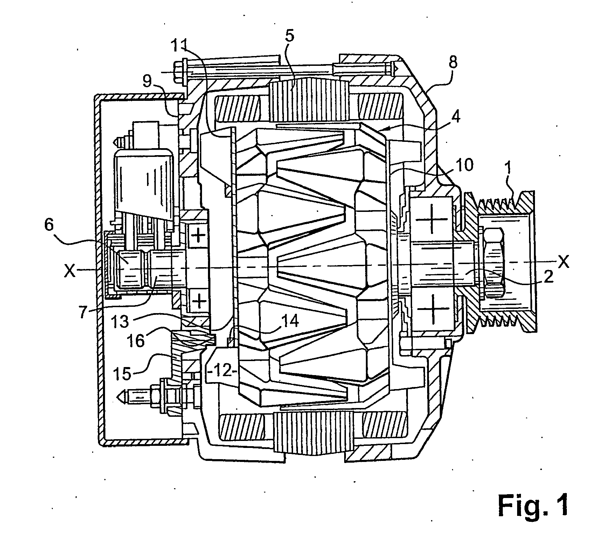

Sur la figure 1, on a représenté un exemple d'alterno-démarreur muni d'un ventilateur de l'invention. Cet alterno-démarreur comporte un organe 1 de transmission de mouvement appartenant à un dispositif de transmission de mouvement, non représenté sur la figure, intervenant entre le moteur thermique du véhicule et l'alterno-démarreur. Cet organe peut être, par exemple, un engrenage, une poulie, etc.. L'organe 1 est un organe mené lorsque la machine fonctionne en mode alternateur et un organe menant lorsque la machine fonctionne en mode démarreur.

Cet organe 1 est traversé en partie par un arbre de rotation 2, dont l'axe de symétrie axiale X-X constitue l'axe de rotation de la machine. Cet arbre 2 porte un rotor 4, par exemple un rotor à griffes, pourvu de bobinages d'excitation dont les extrémités sont reliées par des liaisons filaires à des pistes collectrices 6 et 7 portées par l'extrémité arrière de l'arbre 2.

Le rotor 4 est entouré par un stator bobiné 5 qui comporte un ou plusieurs enroulements, par exemple trois pour la définition de trois phases.

Le rotor 4 est entouré, en partie au moins, par un palier avant 8 et un palier arrière 9, tous deux fixés sur l'arbre 2, par exemple par emmanchement en force.

Dans l'exemple de la figure 1, l'alterno-démarreur comporte un ventilateur avant 10 et un ventilateur arrière 11. Certains alterno-démarreurs comportent un seul ventilateur, généralement le ventilateur arrière 11, plus puissant que le ventilateur avant 10.

Conformément à l'invention, le ventilateur arrière 11 comporte un insert métallique 13 surmoulé par un flasque et des pales de ventilation 12 en matériau plastique. Ce ventilateur intègre également une cible magnétique 14 destinée à assurer le suivi de la rotation du rotor. Cette cible magnétique est associée avec au moins un capteur 16 porté par un porte-capteur 15. De préférence, dans une machine triphasée, les capteurs sont au nombre de trois, tous portés par le porte-capteur 15. Le porte-capteur 15 est fixé sur le fond du palier arrière 9 et, plus précisément, sur la face du palier arrière tournée en regard de la cible 14.

Les capteurs sont de nature magnétique. Ce peut être, par exemple, des capteurs à effet Hall ou bien des capteurs magnéto-résistifs dont la résistance varie en fonction du flux magnétique.

Les capteurs 16 et le porte-capteur 15 de la figure 1 sont de types classiques, connus de l'homme de métier.

Dans l'exemple de la figure 1, les capteurs 16 sont implantés axialement en regard de la cible 14, avec définition d'un entrefer entre les capteurs et la cible, de sorte que la lecture est axiale. Dans un autre mode de réalisation d'un alterno-démarreur, la lecture pourrait être radiale.

L'ensemble cible et capteurs permet de réaliser un suivi de la rotation du rotor de type magnétique. Il est ainsi possible de connaître la position angulaire du rotor ainsi que sa vitesse de rotation, à tout instant.

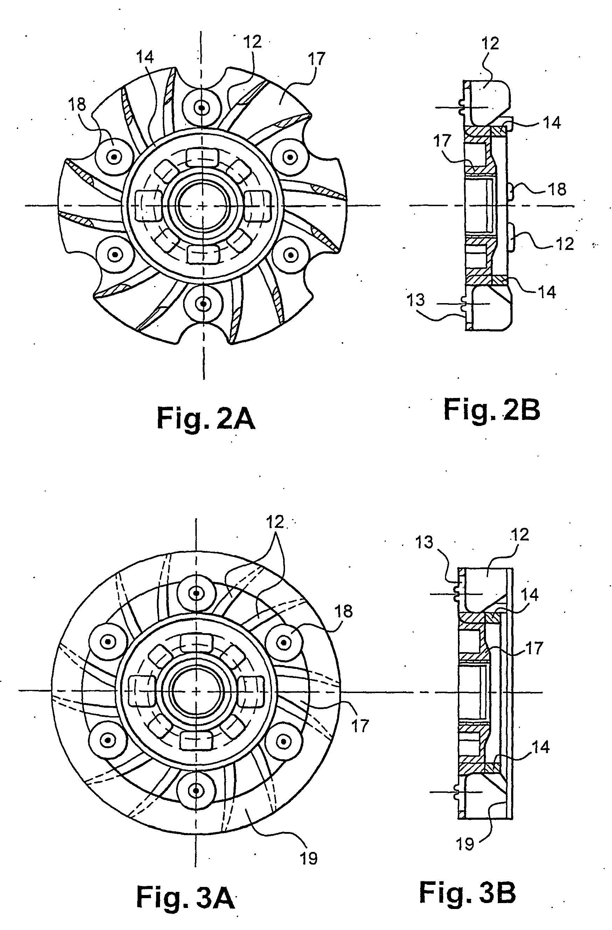

Les figures 2A et 2B représentent un mode de réalisation d'un ventilateur selon l'invention. La figure 2A montre une vue de dessus et la figure 2B un vue de coté de ce ventilateur. Le ventilateur de l'invention comporte un insert métallique 13 surmoulé par un matériau plastique formant un flasque 17 et des pales de ventilation 12. Les pales de ventilation s'étendent à partir du flasque 17.

Autrement dit, le ventilateur de l'invention comporte un insert 13, par exemple en tôle, destiné à être fixé sur le rotor 4 par des techniques de fixation connues telles qu'un vissage, une soudure, etc.. Dans le mode de réalisation des figures 2A et 2B, la fixation de l'insert 13 sur le rotor 4 est réalisée par soudage. Pour cela, l'insert comporte des dépressions 18 destinés à recevoir le matériau de soudage, lors de la soudure du ventilateur sur le rotor. Un flasque 17 et des pales de ventilations 12 sont surmoulés sur la face de l'insert métallique 13 qui est opposée au rotor 4. Lors de l'opération de surmoulage de l'insert par un matériau plastique, on prend soin bien sûr de ne pas recouvrir les dépressions 18 destinés à recevoir, ultérieurement, le matériau de soudage.

Dans un autre mode de réalisation, l'insert est fixé par d'autres moyens de fixation que la soudure. Il se peut alors que l'insert ne comporte pas de dépressions 18 ou que ces dépressions aient des dimensions différentes et/ou soient disposés différemment. Le flasque du ventilateur est surmoulé sur l'insert et comporte donc les mêmes dépressions que l'insert ou n'en comporte pas.

Le ventilateur de l'invention présente la caractéristique d'intégrer une cible de suivi de rotation du rotor. Dans le mode de réalisation des figures 2A et 2B, cette cible est réalisée par une couronne 14 surmoulée sur le flasque 17 du ventilateur. Cette cible 14 est réalisée dans un matériau magnétique moulable tel qu'un plasto-aimant. Un plasto-aimant est un matériau plastique chargé de particules d'un matériau magnétique comme de ferrites ou des terres rares. C'est donc un matériau magnétique que l'on peut mouler pour lui donner la forme souhaitée. Ainsi, dans le mode de réalisation des figures 2A et 2B, le plasto-aimant est moulé sous forme d'une couronne sur le flasque du ventilateur. Il peut aussi être moulé directement sur l'insert et former le flasque et/ou les pales de ventilation.

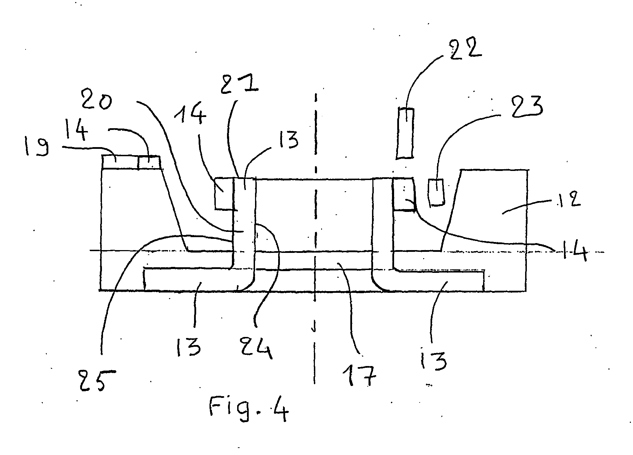

Comme visible à la figure 4, la cible 14 en plasto-aimant est montée selon une variante de réalisation au voisinage d'une extrémité 21 d'un tronçon tubulaire 20 formé par l'insert métallique 13. Avantageusement la cible est montée sur la circonférence externe 25 de ce tronçon. Cela permet d'obtenir une cible de plus grande circonférence permettant ainsi d'obtenir une meilleure précision quant à la position du rotor.

Des capteurs de position axial 22 ou radial 23 sont ensuite placés en regard de cette cible pour déterminer la position du rotor.

Selon une variante de réalisation non représentée, la cible est placée sur la circonférence intérieure 24 du manchon. Cette disposition présente l'avantage d'offrir au plasto-aimant une bonne tenue en centrifugation. Pour des raisons d'encombrement des capteurs, on choisira de préférence dans cette configuration des capteurs positionnés axialement.

Selon un premier mode de réalisation cette cible, réalisée en plasto-aimant est prémoulée. Elle est ensuite placée sur l'extrémité du manchon et est maintenue sur ce manchon par exemple par des moyens de collage connus en soi.

Selon un second mode de réalisation, cette cible en plasto-aimant est formée directement par surmoulage au voisinage de l'extrémité du manchon. On surmoule ainsi directement du plasto-aimant de manière à obtenir une cible magnétique.

Avantageusement selon l'un ou l'autre des procédé de montage ou de réalisation de la cible précédemment décrit, on veillera à obtenir l'entrefer le plus faible possible entre le plasto-aimant est le manchon métallique. Ce très faible entrefer présente l'avantage de réaliser un bon rebouclage du flux magnétique de la cible ce qui permet d'utiliser des capteurs moins sensibles.

On obtient ainsi un ventilateur comportant un insert métallique sur lequel sont surmoulés au moins une pale et une cible magnétique. En variante, cet insert métallique peut également comporter au moins une pale métallique, le ventilateur comportant une première partie de pales en plastique et une seconde partie de pales métalliques. Sur cet insert métallique est également surmoulé un flasque en plastique 17 qui a pour fonction d'assurer une tenue mécanique des pales en plastique.

Dans une variante de l'invention, la cible magnétique est réalisée en introduisant, dans le matériau plastique formant le flasque et/ou les pales du ventilateur, des éléments en matériau magnétique, tel que des ferrites ou des terres rares.

Dans l'exemple des figures 2A et 2B, les pales de ventilation sont réparties deux par deux entre deux dépressions 18. Le nombre et la répartition des pales peuvent bien sûr être différents, selon les besoins de refroidissement.

De même, sur les figures 2A et 2B, les pales ont une forme légèrement incurvée vers la droite. La forme de ces pales peut bien sûr être différente. Les pales du ventilateur de l'invention peuvent avoir toutes les formes possibles, des plus simples aux plus complexes, réalisables pour un ventilateur en matière plastique moulé sur un insert métallique.

De même, dans l'exemple des figures 2A et 2B, le ventilateur comporte un seul étage de pales de ventilation. Toutefois, le ventilateur de l'invention peut comporter un double étage de pales, voir même un triple étage.

En d'autres termes, le ventilateur de l'invention peut être réalisé avec toutes les variantes possibles, connues pour les ventilateurs en matière plastique moulés sur un insert métallique.

En outre, le fait d'avoir un insert métallique, par exemple en tôle, permet d'utiliser les techniques de fixation connues et déjà utilisées avec les ventilateurs connus en plastique surmoulé sur un insert métallique. Cet insert métallique permet, en plus de ses fonctions de tenue mécanique du ventilateur et de fixation du ventilateur sur le rotor, un guidage magnétique du matériau magnétique formant la cible.

Les figures 3A et 3B représentent un autre mode de réalisation du ventilateur de l'invention. Comme dans le mode de réalisation précédent, le ventilateur est réalisé en un matériau plastique moulé sur un insert métallique 13. Dans ce mode de réalisation, le ventilateur comporte, comme sur les figures 2A et 2B, un flasque 17, des pales de ventilation 12 et des dépressions 18.

Dans ce mode de réalisation de l'invention, le ventilateur comporte une couronne 19 en matériau plastique formant une contreplaque. En effet, dans certaines machines, le dissipateur de chaleur, est monté en mezzanine sur le palier arrière de l'alterno-démarreur comme décrit par exemple dans le document WO 2004/040738. Il peut aussi être monté directement sur le palier arrière. Dans ce cas, il est important que le flux d'air qui entre latéralement dans le dissipateur de chaleur vienne radialement vers le centre du dissipateur.

Dans l'invention, on propose de mouler cette contreplaque en même temps que le flasque et les pales de ventilation. Cette contreplaque est réalisée par une couronne 19, située à l'extrémité des pales opposée au flasque. Cette couronne 19 forme une sorte de couvercle partiel au sommet du ventilateur. Dans ce mode de réalisation, les pales de ventilation s'étendent du flasque 17 jusqu'à la couronne 19.

Dans une variante, les pales de ventilation sont réparties sur deux étages, les pales d'un des étages ayant une envergure supérieure. Autrement dit, les pales des deux étages ont des hauteurs différentes. Dans ce cas, la couronne est située au sommet des pales de plus grande hauteur.

Ainsi, dans le mode de réalisation des figures 3A et 3B, la fonction de la contreplaque est réalisée intrinsèquement par le ventilateur lui-même, grâce à la présence de la couronne 19. Cette couronne 19 présente, en plus, l'avantage d'empêcher les pertes volumétriques au-dessus des pales du ventilateur, ce qui améliore encore les fonctions du ventilateur, c'est-à-dire le débit d'air fourni par le ventilateur en rotation. De ce fait, comme le débit d'air par le ventilateur est augmenté, il y est alors possible de réduire la hauteur des pales du ventilateur, ce qui permet de diminuer l'encombrement de ce dernier.

Par ailleurs, la couronne 19 est réalisée par moulage simultané avec le ventilateur. Le montage de la contreplaque ne constitue donc pas une opération de montage supplémentaire. La contreplaque est donc montée simultanément avec le reste du ventilateur.

Le plasto-aimant peut aussi être moulé avec d'autres formes, sur le flasque du ventilateur. Il peut aussi recouvrir une partie ou la totalité du flasque et/ou des pales de ventilation. Avantageusement, la cible 14 peut être surmoulée ou collée contre la couronne comme visible par exemple sur la pale de gauche de la figure 4.

Dans une variante de l'invention, le ventilateur peut comporter un bac à poudre. On rappelle que les fils de connexion du rotor sont connectés au collecteur et, pour éviter tout risque de mouvement de ces fils lors de la rotation du ventilateur, ils sont fixés au moyens d'une poudre, dans un bac à poudre. Cette poudre est généralement de la résine Epoxy. Dans l'invention, le bac à poudre peut être placé sur le flasque du ventilateur ou sur la couronne du ventilateur, dans un emplacement délimité par deux pales.

Dans l'invention le ventilateur peut être centré sur l'arbre de rotation de l'alterno-démarreur. Cela permet de faciliter le centrage du ventilateur et de limiter les problèmes d'équilibrage. En effet, le fait que le ventilateur soit réalisé en matériau plastique offre la possibilité d'équilibrer le ventilateur avant sa mise en place. On peut ainsi s'affranchir des problèmes de balourd.

Dans l'invention, le centrage du ventilateur, du porte-cible et de la contreplaque sur l'arbre de rotation sont réalisé en une seule opération.

Ainsi réalisé, le ventilateur selon l'invention présente des performances élevées, puisqu'il peut prendre des formes variées et complexes, tout en combinant les fonctions d'une cible magnétique et, dans une variante, d'une contreplaque et/ou d'un bac à poudre.

Ce ventilateur présente l'avantage d'avoir un montage simplifié puisqu'il réunit au moins trois pièces en une seule, à savoir l'insert, le ventilateur et la cible magnétique. A cela peut s'ajouter aussi la contreplaque 19. Le montage sur le rotor du ventilateur incorporant la cible magnétique est réalisé en une seule opération identique à une opération habituelle de montage d'un ventilateur en plastique surmoulé sur un insert métallique. Le coût de fabrication du ventilateur de l'invention est également réduit puisqu'il est possible de réaliser par un seul moulage le ventilateur et la contreplaque. En outre, la fabrication d'un porte-cible est inutile puisque le ventilateur lui-même joue le rôle de porte-cible.

De plus, l'utilisation de matériaux plastiques pour réaliser le ventilateur, la cible et la contreplaque permet d'améliorer le refroidissement et donc de refroidir plus efficacement les chignons du stator, ce qui réduit les pertes électromagnétiques et induit un meilleur rendement de la machine.

## Revendications

1. - Ventilateur pour alternateur-démarreur, fixé sur un rotor (4) à pôles magnétiques de l'alternateur-démarreur et comportant :
- un insert métallique (13) par lequel le ventilateur est fixé sur le rotor,
- un flasque (17) et au moins une pale de ventilation (12) en matériau plastique moulés sur l'insert métallique,
**caractérisé en ce qu'**il comporte une cible magnétique (14) qui, en association avec au moins un capteur, assure un suivi magnétique de la rotation du rotor.

2. - Ventilateur selon la revendication 1, **caractérisé en ce qu'**une partie des pales est en matériau plastique surmoulé sur l'insert métallique et **en ce que** l'autre partie des pales est métallique issue de matière avec l'insert métallique.

3. - Ventilateur selon la revendication 1 ou 2, **caractérisé en ce que** la cible magnétique (14) est surmoulée sur l'insert métallique (13).

4. - Ventilateur selon la revendication 1 ou 2, **caractérisé en ce que** la cible magnétique (14) est collée sur l'insert métallique (13).

5. - Ventilateur selon l'une quelconque des revendications 1 à 4, **caractérisé en ce que** la cible magnétique (14) est montée sur un tronçon tubulaire (20) que comporte l'insert métallique (13).

6. - Ventilateur selon la revendication 5, **caractérisé en ce que** la cible magnétique (14) est montée sur la paroi interne (24) du tronçon tubulaire (20).

7. - Ventilateur selon la revendication 5, **caractérisé en ce que** la cible magnétique (14) est montée sur la paroi externe (25) du tronçon tubulaire (20).

8. - Ventilateur selon l'une quelconque des revendications précédentes, **caractérisé en ce qu'**il comporte une couronne (19) en matériau plastique formant contreplaque, certaines au moins des pales du ventilateur s'étendant du flasque jusqu'à la couronne.

9. - Ventilateur selon l'une quelconque des revendications 1 à 4 et la revendication 8, **caractérisé en ce que** la cible magnétique (14) est montée sur la couronne (19).

10. - Ventilateur selon la revendication 9, **caractérisé en ce que** la cible magnétique (14) est montée contre la circonférence interne de la couronne (19).

11. - Ventilateur selon l'une quelconque des revendications précédentes, **caractérisé en ce que** la cible magnétique comporte un matériau magnétique combiné au matériau plastique du flasque et/ou des pales de ventilation.

12. - Ventilateur selon l'une quelconque des revendications précédentes, **caractérisé en ce que** le matériau magnétique de la cible comporte des ferrites ou des terres rares.

13. - Ventilateur selon l'une quelconque des revendications précédentes, **caractérisé en ce que** le matériau magnétique de la cible est un plasto-aimant.

14. - Ventilateur selon l'une quelconque des revendications précédentes, **caractérisé en ce qu'**il forme un bac à poudre pour des fils de connexion du rotor.

15. - Ventilateur selon l'une quelconque des revendications précédentes, **caractérisé en ce que** les pales sont de forme complexe.

16. - Ventilateur selon l'une quelconque des revendications précédentes, **caractérisé en ce que** les pales de ventilation sont réparties sur au moins deux étages.

## Claims

1. Fan for an alternator-starter fixed on a rotor (4), with magnetic poles, of the alternator-starter, the fan comprising:
- a metallic insert (13) whereby the fan is fixed on the rotor,
- a radial web (17) and at least one fan blade (12), which are moulded in plastics material on the metallic insert,
**characterized in that** it includes a magnetic target (14) which, in association with at least one sensor, ensures magnetic following of the rotation of the rotor.

2. A fan according to claim 1, **characterized in that** one group of blades is of plastics material moulded in situ on the metallic insert and **in that** the remainder of the blades are of metal projecting integrally from the metallic insert.

3. A fan according to claim 1 or 2, **characterized in that** the magnetic target (14) is moulded in situ on the metallic insert (13).

4. A fan according to claim 1 or 2, **characterized in that** the magnetic target (14) is adhesively bonded on the metallic insert (13).

5. A fan according to any one of claims 1 to 4, **characterized in that** the magnetic target (14) is mounted on a tubular portion (20) of the metallic insert (13).

6. A fan according to claim 5, **characterized in that** the magnetic target (14) is mounted on the internal wall (24) of the tubular portion (20).

7. A fan according to claim 5, **characterized in that** the magnetic target (14) is mounted on the external wall (25) of the tubular portion (20).

8. A fan according to any one of the preceding claims, **characterized in that** it includes a crown element (19) of plastics material constituting a shroud ring, with at least some of the blades of the fan extending from the web to the crown element.

9. A fan according to any one of claims 1 to 4 and claim 8, **characterized in that** the magnetic target (14) is mounted on the cover (19).

10. A fan according to claim 9, **characterized in that** the magnetic target (14) is mounted against the inner circumference of the cover (19).

11. A fan according to any one of the preceding claims, **characterized in that** the magnetic target comprises a magnetic material combined with the plastics material of the web and/or fan blades.

12. A fan according to any one of the preceding claims, **characterized in that** the magnetic material of the target comprises ferrites or rare earths.

13. A fan according to any one of the preceding claims, **characterized in that** the magnetic material of the target is a plasto-magnet.

14. A fan according to any one of the preceding claims, **characterized in that** it constitutes a powder pot for the connecting wires of the rotor.

15. A fan according to any one of the preceding claims, **characterized in that** the blades are of complex form.

16. A fan according to any one of the above claims, **characterized in that** the fan blades are spaced apart over at least two stages.

## Patentansprüche

1. Lüfter für Starter-Generator, der an einem Rotor (4) mit magnetischen Polen des Starter-Generators befestigt ist und
- einen Metalleinsatz (13), über den der Lüfter an dem Rotor befestigt ist, und
- einen Flansch (17) und mindestens eine Lüfterschaufel (12) aus Kunststoff, die auf den Metalleinsatz aufgeformt sind,
umfasst, **dadurch gekennzeichnet, dass** er ein Magnetziel (14) umfasst, das in Verbindung mit mindestens einem Sensor eine magnetische Überwachung der Drehung des Rotors sicherstellt.

2. Lüfter nach Anspruch 1, **dadurch gekennzeichnet, dass** ein Teil der Schaufeln aus Kunststoff besteht und auf den Metalleinsatz aufgeformt ist, und dass der andere Teil der Schaufeln aus Metall aus Werkstoff mit dem Metalleinsatz ist.

3. Lüfter nach Anspruch 1 oder 2, **dadurch gekennzeichnet, dass** das Magnetziel (14) an den Metalleinsatz (13) angeformt ist.

4. Lüfter nach Anspruch 1 oder 2, **dadurch gekennzeichnet, dass** das Magnetziel (14) an den Metalleinsatz (13) geklebt ist.

5. Lüfter nach einem der Ansprüche 1 bis 4, **dadurch gekennzeichnet, dass** das Magnetziel (14) auf einem Rohrstück (20) angeordnet ist, das der Metalleinsatz (13) umfasst.

6. Lüfter nach Anspruch 5, **dadurch gekennzeichnet, dass** das Magnetziel (14) an der Innenwand (24) des Rohrstücks (20) angeordnet ist.

7. Lüfter nach Anspruch 5, **dadurch gekennzeichnet, dass** das Magnetziel (14) an der Außenwand (25) des Rohrstücks (20) angeordnet ist.

8. Lüfter nach einem der vorhergehenden Ansprüche, **dadurch gekennzeichnet, dass** er einen Kranz (19) aus Kunststoff umfasst, der eine Gegenplatte bildet, wobei sich mindestens einige der Lüfterschaufeln vom Flansch bis zum Kranz erstrecken.

9. Lüfter nach einem der Ansprüche 1 bis 4 und Anspruch 8, **dadurch gekennzeichnet, dass** das Magnetziel (14) auf dem Kranz (19) angeordnet ist.

10. Lüfter nach Anspruch 9, **dadurch gekennzeichnet, dass** das Magnetziel (14) gegen den Innenumfang des Kranzes (19) angeordnet ist.

11. Lüfter nach einem der vorhergehenden Ansprüche, **dadurch gekennzeichnet, dass** das Magnetziel einen magnetischen Werkstoff enthält, der mit dem Kunststoff des Flansches und/oder der Lüfterschaufeln kombiniert ist.

12. Lüfter nach einem der vorhergehenden Ansprüche, **dadurch gekennzeichnet, dass** der magnetische Werkstoff des Ziels Ferrite oder Seltenerden enthält.

13. Lüfter nach einem der vorhergehenden Ansprüche, **dadurch gekennzeichnet, dass** der magnetische Werkstoff des Ziels ein Kunststoffmagnet ist.

14. Lüfter nach einem der vorhergehenden Ansprüche, **dadurch gekennzeichnet, dass** er einen Pulverbehälter für die Anschlussdrähte des Rotors bildet.

15. Lüfter nach einem der vorhergehenden Ansprüche, **dadurch gekennzeichnet, dass** die Schaufeln eine komplexe Form aufweisen.

16. Lüfter nach einem der vorhergehenden Ansprüche, **dadurch gekennzeichnet, dass** die Lüfterschaufeln auf mindestens zwei Ebenen verteilt sind.
